(19) Europäisches Patentamt
European Patent Office
Office européen des brevets

(11) **EP 1 930 712 B1**

(12) **FASCICULE DE BREVET EUROPEEN**

(45) Date de publication et mention
de la délivrance du brevet:
**04.01.2012 Bulletin 2012/01**

(51) Int Cl.:
***G01N 11/02*** *(2006.01)*

(21) Numéro de dépôt: **07301584.4**

(22) Date de dépôt: **26.11.2007**

(54) **Dispositif de détermination des propriétés d'un écoulement diphasique, et procédé mettant en oeuvre un tel dispositif**

Vorrichtung zur Bestimmung der Eigenschaften einer Zweiphasenströmung und Einsatzverfahren einer solchen Vorrichtung

Device for determining the properties of a two-phase flow and method implementing such a device

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.12.2006 FR 0655352**

(43) Date de publication de la demande:
**11.06.2008 Bulletin 2008/24**

(73) Titulaire: **Commissariat à l'Énergie Atomique et aux Énergies Alternatives**
**75015 Paris (FR)**

(72) Inventeurs:
• **Clement, Patrice**
**38120, SAINT EGREVE (FR)**
• **Tochon, Patrice**
**38140, Uriage (FR)**
• **Oriol, Jean**
**94420 Le Plessis Trevise (FR)**
• **Veteau, Jean-Michel**
**38330, Saint Nazaire Les Eymes (FR)**

(74) Mandataire: **Palix, Stéphane et al**
**Cabinet Laurent & Charras**
**"Le Contemporain"**
**50, Chemin de la Bruyère**
**69574 Dardilly Cedex (FR)**

(56) Documents cités:
**EP-A1- 0 225 741    FR-A1- 2 423 770**
**FR-A1- 2 513 374    US-A- 4 228 353**
**US-B1- 6 335 959**

## Description

### Domaine technique

L'invention se rattache au domaine des équipements thermiques tels que les échangeurs de chaleur. Elle concerne plus précisément de l'instrumentation mise en place dans ce type d'équipement pour en caractériser le fonctionnement. Elle vise plus spécifiquement un dispositif permettant la mesure de certaines propriétés d'écoulements diphasiques circulant dans ces équipements.

### Techniques antérieures

Dans le domaine des équipements thermiques tels que les échangeurs de chaleur, la connaissance des conditions de fonctionnement, et en particulier des caractéristiques de l'écoulement du ou des fluides circulant est primordiale.

En effet, pour assurer des performances d'échanges thermiques satisfaisantes, le fluide est amené à transiter dans de multiples canaux disposés en parallèle hydrauliquement, avec une équi-répartition des débits. Mais cette distribution n'est pas toujours assurée soit pour des raisons de conception ou de réalisation, soit pour des raisons de procédés d'utilisation mal maîtrisés ou non adaptés, ce qui peut provoquer encrassement, détérioration mécanique...

Afin d'éviter ce type de problème, les échangeurs sont fréquemment conçus de manière surdimensionnée, avec bien entendu pour conséquence une occupation d'un volume plus important, et un coût plus élevé.

Les phénomènes d'anomalies hydrauliques sont encore plus critiques sur les écoulements subissant un changement de phase.

A titre d'exemple, les évaporateurs de cycles de réfrigération qui sont alimentés en régime diphasique lorsqu'ils sont situés en aval du détendeur, font l'objet d'une recherche de compacité. Pour ce faire, la maîtrise de tous les paramètres de l'écoulement, et en particulier l'homogénéité d'alimentation diphasique des différents canaux est un enjeu majeur. Dans le domaine de la cryogénie, cette homogénéité est délicate à maîtriser, de sorte que l'on observe fréquemment que les installations comportent un séparateur liquide/vapeur en amont des échangeurs. Ce séparateur est combiné à un distributeur de chacune des phases liquide et vapeur, pour en assurer une distribution homogène. Bien entendu, ces équipements complémentaires rendent l'installation globale plus complexe, et plus coûteuse.

En pratique, la détermination des propriétés des écoulements diphasiques peut s'effectuer de manière optique, en analysant le taux de transmission d'un rayonnement électromagnétique, en particulier lumineux, au travers d'une région de l'écoulement. Pour ce faire, un détecteur constitué d'un organe émetteur et d'un organe récepteur est installé de part et d'autre d'une conduite canalisant l'écoulement, cette conduite étant en un matériau "transparent" par rapport au rayonnement électromagnétique émis.

La transmission de la lumière au travers de la phase gazeuse et de la phase liquide est légèrement différente, de sorte que le rayonnement transmis varie en fonction de la structure de l'écoulement. Plus précisément, la transmission est particulièrement sensible au nombre d'interfaces liquide/gaz présentes entre l'émetteur et le récepteur.

Plus le nombre d'interfaces est élevé, plus les phénomènes de réflexion sur ces interfaces sont importants, et plus faible est le taux de transmission. L'analyse du signal capté par l'organe récepteur permet ainsi d'identifier la typologie de la structure de l'écoulement. On peut ainsi distinguer les écoulements stratifiés ou à vagues, dans lequel la transmission est globalement constante, puisqu'il existe généralement une seule interface liquide/gaz au niveau de l'écoulement. Il est également possible d'identifier des écoulements dits "à bouchons" dans lesquels la phase gazeuse est rassemblée entre des zones dans lesquelles la phase liquide occupe la totalité de la section de la conduite. Il est également possible d'identifier des écoulements dits "à poches", dans lesquels l'écoulement transporte des poches gazeuses et donc présente un nombre d'interfaces gaz/liquide important.

Enfin, un cas particulier concerne les écoulements annulaires dans lesquels la phase gazeuse se trouve concentrée au centre de l'écoulement, et transporte un nombre important de gouttelettes; ces écoulements présentent donc un nombre d'interfaces très important.

Cette analyse du caractère diphasique de l'écoulement présente un grand intérêt puisqu'il permet d'identifier un type de structure d'écoulement, significatif en particulier de certains phénomènes résultant des échanges thermiques.

En revanche, cette technique ne permet pas d'appréhender des caractéristiques importantes au niveau d'un écoulement que sont en particulier les analyses de temps de séjour, qui permettent de connaître la manière dont le fluide se déplace à l'intérieur de l'écoulement, et de distinguer par exemple les écoulements de type "piston" des écoulements de type "parfaitement mélangés".

L'analyse des temps de séjour est connue par des techniques qui sont applicables à des écoulements monophasiques. Ainsi, on connaît des techniques basées sur l'emploi de traceurs colorés, chimiques ou radioactifs.

Plus précisément, une telle technique consiste à injecter un traceur en un point de l'écoulement, de manière à analyser en un autre point de l'écoulement situé en aval l'évolution de sa concentration, prenant en compte les phénomènes hydrauliques intervenus entre ces deux points de mesure. Les propriétés de la diffusion, ainsi que les vitesses d'écoulement peuvent ainsi être analysées.

Ces techniques employant des traceurs ne peuvent toutefois pas être appliquées à l'analyse des écoulements diphasiques. En effet, dans la mesure où un écoulement diphasique comporte deux phases présentes en quantité variable, voire aléatoire et surtout évolutive au sein de l'écoulement, un signal lié à l'évolution du traceur dépendrait principalement de cette structure diphasique, et plus précisément de la quantité de liquide (si le traceur est injecté dans la phase liquide) présente à l'aplomb d'un détecteur.

Autrement dit, les variations très rapides de la structure d'un écoulement diphasique conduisent à un signal de transmission qui est fortement agité, et qui ne permet pas une analyse de la variation de la concentration d'un traceur.

Un des objectifs de l'invention est donc de permettre d'accéder simultanément à des informations relatives à la présence d'un traceur dans une des phases de l'écoulement, et ce, malgré le caractère bruité ou modulé découlant de la nature diphasique de l'écoulement. Un autre objectif est d'aboutir à une analyse aussi complète que possible de l'écoulement diphasique, tant en ce qui concerne sa topologie ou sa structure que les propriétés hydrodynamiques concernant la vitesse d'écoulement.

**Exposé de l'invention**

L'invention concerne donc un dispositif de détermination des propriétés d'écoulement diphasique.

De façon classique, ce dispositif comprend un premier détecteur incluant un ensemble formé d'un organe émetteur d'un rayonnement électromagnétique, et d'un organe récepteur du même rayonnement. Ces deux organes sont disposés en regard l'un de l'autre, de telle sorte que l'organe récepteur capte le rayonnement issu de l'organe émetteur et transmis au travers de l'écoulement.

Conformément à l'invention, ce dispositif se caractérise en ce qu'il comprend des moyens d'injection d'un traceur dans l'une des phases de l'écoulement et qu'il comporte un second détecteur apte à détecter la présence d'un élément traceur présent dans l'une des phases de l'écoulement. Le premier détecteur présente une faible sensibilité au traceur détecté par le second détecteur

Autrement dit, le dispositif de détermination conforme à l'invention se compose de deux détecteurs conjoints, l'un assurant classiquement l'analyse d'un rayonnement transmis, délivrant donc un signal découlant de la nature diphasique de l'écoulement. L'autre détecteur est quant à lui sensible à la présence d'un traceur de manière à appréhender les paramètres tels que la vitesse d'écoulement et la distribution de temps de séjour.

Avantageusement en pratique, les détecteurs sont disposés dans une même zone de l'écoulement, de manière à ce que la topologie de l'écoulement ne se modifie pas entre ces deux détecteurs, et que les signaux issus des deux détecteurs comportent la même composante induite par le caractère diphasique de l'écoulement, à un décalage temporel près, résultant de la distance entre les détecteurs.

Complémentairement, dans le cas où les deux détecteurs sont de type émetteur/récepteur d'un rayonnement électromagnétique, ces deux détecteurs peuvent présenter des sensibilités dans des bandes de fréquence distinctes, de sorte que le premier détecteur présente une faible sensibilité au traceur détecté par le second détecteur. De cette manière, le premier détecteur général signale ce qui est uniquement représentatif de la structure ou de la configuration diphasique de l'écoulement, tandis que le second détecteur est d'abord sensible à la présence du traceur tout en comportant une composante également dépendant de la configuration diphasique de l'écoulement. Bien entendu, en pratique, même le premier détecteur peut présenter une légère sensibilité au traceur, mais sans commune mesure avec celle exercée par le second détecteur.

L'invention concerne également le procédé de détermination des propriétés de l'écoulement diphasique, qui met en oeuvre un tel dispositif. Ainsi, on analyse non seulement le signal issu du premier détecteur, mais également celui issu du second détecteur, de manière à les déconvoluer afin d'obtenir un signal traité représentatif de l'évolution du traceur à l'intérieur de la phase où ce traceur est présent.

Autrement dit, la combinaison des deux signaux, l'un étant surtout sensible à la nature diphasique de l'écoulement, l'autre étant sensible à cette nature diphasique mais surtout à la présence du traceur, permet d'isoler la composante dans ce second signal qui est uniquement représentative de l'évolution du traceur.

En d'autres termes, la combinaison par déconvolution des signaux issus des deux détecteurs permet de s'affranchir de la composante modulée résultant de l'écoulement diphasique pour ne conserver que celle représentative de la présence du traceur, comme si l'on se trouvait dans le cas d'un écoulement monophasique.

En pratique, ce traceur peut être introduit dans l'une des phases sous forme d'une variation de concentration (par exemple une impulsion ou un échelon, etc...), en un point de l'écoulement distant de la zone où est implanté le dispositif de mesure.

Ainsi, en fonction de l'évolution dans le temps de la concentration du traceur, il est possible d'en déduire une distribution de temps de séjour, en tenant compte en particulier des phénomènes de diffusion du traceur dans la phase considérée.

En pratique, le traceur peut être choisi de manière très variée, et en fonction de la nature chimique du fluide à étudier, ainsi que de la phase dans laquelle ce traceur sera injecté, par exemple parmi les colorants, les sels et les traceurs radioactifs.

En pratique, l'invention permet d'accéder à des informations relatives à la nature diphasique de l'écoulement. Ainsi, il est possible de déterminer la vitesse réelle de la phase incluant le traceur, en mesurant le temps de séjour du traceur entre un point au niveau duquel est implanté le second détecteur, et un autre point situé à l'aplomb d'un capteur complémentaire également sensible au traceur, et disposé à un emplacement distinct sur l'écoulement. La distance séparant ces deux points de mesure, rapportée au temps nécessaire au traceur pour parcourir cette distance, permet d'évaluer la vitesse réelle de la phase dans laquelle circule le traceur.

De manière complémentaire, il est possible de déterminer la vitesse débitante de la phase incluant le traceur, par une mesure par exemple du débit de la phase considérée, rapportée à la section de passage global dans laquelle circule l'ensemble de l'écoulement diphasique. Ainsi, il est alors possible de déterminer le taux de vide c'est-à-dire le ratio entre les volumes occupés par les deux phases, à partir des vitesses réelle et débitante de la phase incluant le traceur.

Selon une autre caractéristique de l'invention, il est également possible de mesurer le décalage temporel entre les signaux issus des deux détecteurs d'un même dispositif, de manière à obtenir une information représentative de la vitesse moyenne de transit des interfaces entre les deux phases.

Cette vitesse de transit des interfaces présente un intérêt dans l'évaluation de la vitesse relative des deux phases, qui apporte une information sur la structure diphasique de l'écoulement, indispensable à l'estimation des pertes de pression.

**Description sommaire des figures**

La manière de réaliser l'invention, ainsi que les avantages qui en découlent ressortiront bien de la description du mode de réalisation qui suit, à l'appui des figures annexées dans lesquelles :

La figure 1 est une vue schématique d'un dispositif conforme à l'invention, montrée mise en place sur un conduit parcouru par un écoulement diphasique. La figure 2 est une vue schématique de la même conduite montrant le dispositif conforme à l'invention fonctionnant en association avec un capteur complémentaire.

Les figures 3 et 4 sont des représentations des signaux délivrés respectivement par le premier et le second détecteur du dispositif conforme à l'invention.

La figure 5 est une représentation schématique du signal traité résultant de la combinaison de deux signaux des figures 3 et 4.

La figure 6 est un chronogramme montrant de façon superposée les deux signaux provenant chacun d'un détecteur du dispositif conforme à l'invention.

La figure 7 est un chronogramme élaboré à partir de la figure 6, dans lequel est en plus représenté un écoulement diphasique correspondant aux signaux de la figure 6.

**Manière de réaliser l'invention**

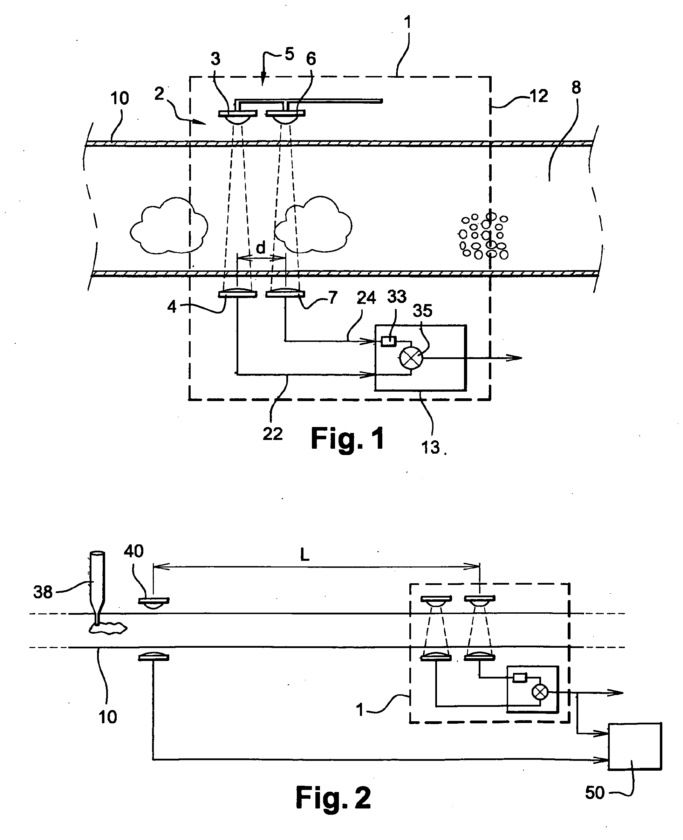

Le dispositif (1) conforme à l'invention tel qu'illustré à la figure 1, comporte de façon principale un premier détecteur (2), constitué par un organe émetteur (3) disposé en regard d'un organe récepteur (4) par rapport à la conduite (10). Cet organe récepteur (4) est sensible au rayonnement électromagnétique émis par l'organe émetteur (3). Ce premier détecteur (2) est associé à un second détecteur (5), qui lui est contigu, et dans la forme illustrée, également constitué d'une paire d'émetteur (6) / récepteur (7) d'un rayonnement électromagnétique.

Pour le bon fonctionnement de l'invention, les deux détecteurs présentent des sensibilités dans les bandes de fréquence préférentiellement disjointes, de manière à ce qu'un seul (5) des deux détecteurs soit sensible au passage du traceur.

Ainsi, à titre d'exemple, on injecte un traceur colorant injecté dans la phase liquide; un des détecteurs sera sensible dans une plage de longueur d'ondes correspondant au maximum d'effet du colorant. De cette manière, la variation de concentration en colorant sera mesurée par le second détecteur sensible dans la bande d'absorption maximale de ce colorant, alors que le premier détecteur sera sensible sur une plage de longueur d'ondes décalée de la bande d'absorption du colorant. De la sorte, le premier détecteur (2) émettra un signal représentatif de la structure diphasique de l'écoulement, et très faiblement influencé par le passage du colorant.

A l'inverse, le second détecteur (5) délivrera un signal qui sera fonction à la fois du passage du colorant et de la structure diphasique de l'écoulement. La faible distance entre les détecteurs (2, 5) permet d'éviter une modification de la structure de l'écoulement, entre les deux détecteurs, en particulier pour leur emploi dans des équipements impliquant des changements de phase, du type ébullition ou condensation.

En pratique, on a obtenu de bons résultats en utilisant des détecteurs basés sur la combinaison d'une diode d'émission (3, 6) et d'une photodiode de réception (4, 7).

Dans un exemple de réalisation précis, mais non limitatif, le premier détecteur (2) est constitué par combinaison d'une diode d'émission (3), présentant une longueur d'ondes préférentiellement la plus éloignée possible de la diode d'émission (6) du second détecteur (5). Ainsi, on a obtenu de bons résultats en utilisant une diode émettrice émettant dans l'infrarouge, au voisinage de 880 nm, en utilisant un émetteur commercialisé sous la référence SFH 45 80 par la société SIEMENS.

De même, l'organe récepteur (4) est sensible dans cette gamme de fréquence, et un composant donnant satisfaction est la photodiode réceptrice commercialisée sous la référence SFH 2500 FA par la société SIEMENS.

Par ailleurs, pour le second détecteur (5), la diode d'émission (3, 6) est choisie pour émettre dans un spectre relativement large, afin d'obtenir le maximum de signal sur la photodiode de réception (4, 7). Dans un cadre précis, une diode d'émission (3) telle que celle commercialisée sous la référence NSPW500 par la société NICHIA présente la particularité d'émettre à très haute luminosité (intensité supérieure à 4 000 mcd pour une alimentation de 20 mA), avec un faisceau d'émission relativement étroit, de l'ordre de 20°.

On a obtenu de bons résultats en utilisant une photodiode réceptrice (4) du type photodiode silicium telle que celle commercialisée sous la référence PN BPW21R par la société VISHAY SEMICONDUCTORS. Cette photodiode présente la particularité de posséder une réponse linéaire tout en étant dotée d'un filtre de correction des couleurs qui lui donne une courbe de réponse approchant celle de l'oeil humain. La sensibilité maximale de cette photodiode réceptrice est centrée sur 570 nm environ, correspondant au pic d'absorbance du colorant utilisé dans le cas de l'indigotine E132.

Bien entendu, de nombreux autres composants peuvent être employés, dès lors qu'ils respectent les principes de l'invention, c'est-à-dire de posséder des sensibilités dans des gammes de fréquence légèrement décalées.

De même, il est possible d'utiliser un détecteur sensible à des traceurs radioactifs, comme le Krypton 81m, émetteur de rayons $\gamma$. On peut aussi utiliser des sels (p.ex NaCl) et mesurer la conductivité électrique avec un conductimètre, mais aussi par exemple l'hexafluorure de soufre ($SF_6$), et mesurer la conductivité thermique avec un catharomètre.

Dans le cas où les deux détecteurs comportent un émission/réception, il est préférable qu'ils présentent des axes d'émission/réception sensiblement parallèles, de manière à traverser le même nombre d'interfaces dans l'écoulement. En revanche, pour les autres types de traceurs, il n'y a pas de contrainte dans la position relative des deux capteurs.

D'un point de vue matériel, les deux détecteurs peuvent être implantés dans un boîtier (12) incluant les composants électroniques (13) permettant de traiter les signaux issus des deux détecteurs.

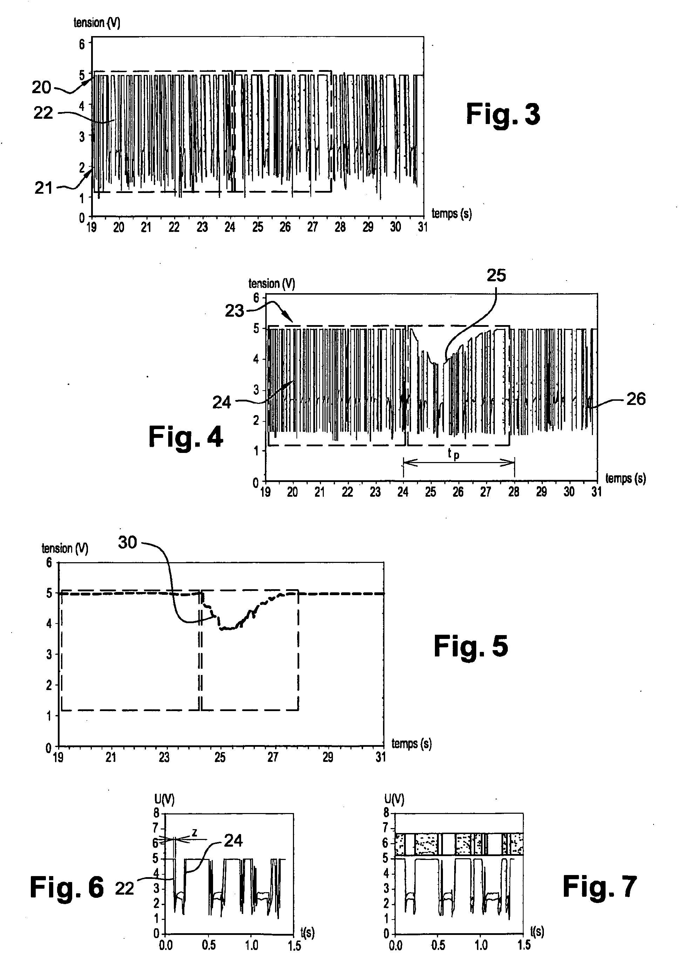

Les figures 3 et 4 illustrent les signaux qui sont délivrés par les deux détecteurs, pour un écoulement diphasique de type "à bouchons". Ainsi, le signal illustré à la figure 3 montre de brusques variations correspondant au passage de phases gazeuses qui occupent sensiblement l'intégralité de la section de la conduite. Ce signal (22) donc oscille approximativement entre deux valeurs correspondant pour l'une (21) à une transmission dans une phase liquide seule, et pour l'autre (20) à une transmission dans la phase gazeuse uniquement.

Le signal illustré à la figure 4 correspond au signal est délivré par le second détecteur (5), sensible à la nature diphasique de l'écoulement ainsi qu'à la présence du traceur.

On observe que ce signal (24) présente le même caractère oscillatoire lié à la nature diphasique d'écoulement, dans la première partie (23) de la période représentée. Puis, pendant un intervalle de temps d'une longueur $t_p$, le maximum (25) atteint par le signal varie. Ce maximum (25) correspond à une transmission au travers de la phase gazeuse à l'intérieur de laquelle a été injecté le traceur. Cette diminution temporaire de ce maximum de transmission résulte du fait que le traceur absorbe une partie de la lumière émise par l'organe émetteur du second détecteur, et ce en proportion avec la concentration du traceur dans la phase gazeuse.

La valeur minimale (26) du signal n'est pas affectée, dans la mesure où elle correspond à la transmission à travers la phase liquide dans laquelle le traceur n'est pas présent. C'est pourquoi il est important de respecter des distances faibles entre les détecteurs, pour que le temps de séjour du traceur entre les deux détecteurs soit petit devant son temps de diffusion vers le liquide.

On constate sur la figure 4 que la nature diphasique de l'écoulement induit une oscillation du signal délivré par le détecteur qui rend difficile, voire impossible la détermination précise de l'influence du passage du traceur.

Toutefois, et selon une caractéristique avantageuse de l'invention, la combinaison, par déconvolution des deux signaux (22, 24), délivrés par les détecteurs permet de mettre en évidence un signal traité (30) beaucoup plus aisément exploitable, et tel qu'il est représenté à la figure 5. Cette déconvolution s'effectue ici par soustraction, après mise à l'échelle de chacun des deux signaux (22, 24), et de manière à ce qu'ils présentent des amplitudes identiques pour ce qui concerne les périodes d'écoulement en absence de traceur.

Compte tenu du léger décalage temporel entre les signaux, dû à la distance qui sépare les deux détecteurs (2, 5), une temporisation (33) est appliquée au second signal avant sa soustraction (35) du premier signal. Ce décalage temporel peut être réglé manuellement ou évalué de façon automatique par des filtrages appropriés, pendant une période d'écoulement en l'absence de traceur.

En pratique, il est possible que le signal issu du premier détecteur (2) subisse une légère influence due au passage du traceur, à cause d'une légère sensibilité à ce traceur. Toutefois, une pondération appropriée entre les deux signaux (22, 24) permet de décorréler les deux phénomènes pour aboutir à un signal (30) tel qu'illustré à la figure 5, représentatif uniquement de l'évolution de la transmission due au passage du traceur dans la phase tracée.

Ainsi, le signal traité illustré à la figure 5 permet d'appréhender des paramètres relatifs à la distribution de temps de séjour, ainsi que la diffusion du traceur au sein de la fin de tracé.

Pour ce faire, le procédé d'analyse peut nécessiter comme illustré à la figure 2 la détection des instants de passage du traceur à proximité de son point d'injection (38). Ainsi, un détecteur complémentaire (40), avantageusement identique ou analogue au second détecteur (5) est implanté en amont du dispositif caractéristique (1). Il est ainsi possible de déterminer la vitesse réelle de la phase tracée, qui par hypothèse pour la suite de la description sera la phase liquide.

On détermine tout d'abord la longueur L qui sépare le détecteur supplémentaire (40) du second détecteur (5). Cette longueur L peut être mesurée géométriquement, soit déterminée expérimentalement par la mesure du temps de séjour moyen avec un débit connu pour un écoulement en monophasique. Le temps de séjour du traceur entre le détecteur complémentaire (40) et le second détecteur (5) est mesuré comme étant le décalage temporel évalué par l'unité (50) entre l'instant ($t_e$) où le détecteur complémentaire commence à détecter le passage du traceur, et l'instant ($t_s$) où la même détection est effectuée par le second détecteur (5).

La vitesse réelle de la phase liquide $u_1$ est alors donnée par l'équation suivante : $u_l = \dfrac{L}{t_s - t_e}$

La détermination de cette vitesse réelle $u_1$ est utile pour connaître le taux de vide $\alpha$ correspondant au rapport des volumes entre la phase liquide et la phase gazeuse.

Pour ce faire, il convient de connaître la vitesse débitante de la phase liquide, correspondant au débit de la phase liquide mesurée par exemple par un débitmètre, rapporté à la section A de la conduite au niveau de la mesure caractéristique. Ainsi, sachant qu'il y a conservation de masse entre l'entrée et la sortie de la section comprise entre les deux capteurs, il est possible de calculer le ratio entre phase gazeuse et phase liquide, également appelé "taux de vide" selon l'équation suivante :

$$\alpha = \dfrac{1}{1 + \dfrac{j_l}{u_l - j_l}}$$

Ainsi, les signaux issus des deux détecteurs permettent d'évaluer grâce au phénomène de traçage des caractéristiques de l'écoulement propre à sa nature diphasique. La forme des signaux est caractéristique de la structure de l'écoulement. Des créneaux symétriques sont observés pour un écoulement "à bouchons". Des créneaux asymétriques sont globalement caractéristiques d'un écoulement "à poches", et un signal chaotique dont la valeur moyenne est proche de la valeur mesurée, en présence de gaz uniquement et représentatif d'un écoulement annulaire.

De même, en traçant successivement, voire simultanément les deux phases, on peut accéder aux différentes vitesses moyennes de ces phases et en déduire leur rapport et également "taux de glissement".

Complémentairement et comme illustré à la figure 6, il est possible de tirer profit de la mesure du décalage temporel entre les signaux caractéristiques de l'écoulement diphasique et ce, y compris dans les phases où le traceur va être absent.

La connaissance de la distance d entre les deux capteurs (4, 7) permet ainsi de déduire une vitesse de transit des interfaces diphasiques. Plus précisément, les deux signaux illustrés à la figure 6 présentent un décalage τ, que l'on observe en particulier dans le cas illustré d'un écoulement à créneaux symétriques représentatif d'un écoulement "à bouchons".

Le décalage temporel τ des deux signaux peut être annulé par traitement, pour obtenir, comme illustré à la figure 7, une superposition des deux signaux. Connaissant la distance d séparant les deux détecteurs, il est possible d'accéder à la vitesse de transit de l'interface liée au bouchon comme étant le rapport d/τ.

Il ressort de ce qui précède que le dispositif conforme à l'invention et le procédé analogue présente de multiples avantages, et notamment la possibilité de détecter rapidement la structure de l'écoulement par une analyse de la forme des signaux donnés par l'un ou l'autre des détecteurs. Il permet également d'accéder à une estimation du taux de vide à partir de mesures optiques ou analogues relatives au passage du traceur. Il permet surtout de s'affranchir de la nature diphasique de l'écoulement pour effectuer des analyses de temps de séjour du type de celles qui sont mises en oeuvre, de manière immédiate, pour des écoulements monophasiques.

**Revendications**

1. Dispositif (1) de détermination des propriétés d'un écoulement diphasique, comprenant un premier détecteur (2), incluant un ensemble formé d'un organe émetteur (3) d'un rayonnement électromagnétique, et un organe récepteur (4) dudit rayonnement, disposé en regard de l'organe émetteur (3), pour capter le rayonnement issu de l'organe émetteur (3) et transmis au travers de l'écoulement (8), **caractérisé en ce qu'**il comprend en outre des moyens d'injection d'un traceur dans l'une des phases de l'écoulement et qu'il comporte un second détecteur (5), apte à détecter la présence d'un élément traceur présent dans l'une des phases de l'écoulement (8), le premier détecteur (2) présentant une faible sensibilité au traceur détecté par le second détecteur (5).

2. Dispositif selon la revendication 1, **caractérisé en ce que** les deux détecteurs (2, 5) sont disposés dans une même zone de l'écoulement.

3. Dispositif selon la revendication 1, **caractérisé en ce que** le second détecteur inclut un ensemble formé d'organes émetteur (6) et récepteur (7) d'un rayonnement électromagnétique.

4. Dispositif selon la revendication 1, **caractérisé en ce qu'**il comporte des moyens (35) pour assurer la déconvolution des signaux (22, 24) issus des deux détecteurs (2, 5).

5. Dispositif selon la revendication 1, **caractérisé en ce que** les organes émetteurs (3, 6) des détecteurs sont des diodes électroluminescentes.

6. Procédé de détermination des propriétés d'un écoulement diphasique, dans lequel on analyse le signal (22) issu d'un premier détecteur (2) mesurant le rayonnement transmis au travers de l'écoulement (8), **caractérisé en ce que** :

   ■ on analyse le signal (24) issu d'un second détecteur (5) sensible à la présence d'un traceur dans l'une des deux phases de l'écoulement (8) ;
   ■ on déconvolue les deux signaux (22, 24) de manière à obtenir un signal (30) traité représentatif de l'évolution du traceur à l'intérieur de la phase où ce traceur est présent.

7. Procédé selon la revendication 6, **caractérisé en ce que** le traceur est introduit dans une des phases, sous forme d'une variation de concentration.

8. Procédé selon la revendication 6, **caractérisé en ce que** le traceur est choisi parmi le groupe comprenant les colorants, les sels et composants radioactifs.

9. Procédé selon la revendication 6, **caractérisé en ce que** l'on détermine la vitesse réelle de la phase incluant le traceur en mesurant le temps de séjour du traceur entre un point situé à l'aplomb du second détecteur (5), et un point situé à l'aplomb d'un capteur complémentaire (40) sensible au traceur, et disposé à un emplacement distinct sur l'écoulement.

10. Procédé selon la revendication 6, **caractérisé en ce que** l'on détermine la vitesse débitante de la phase incluant le traceur.

11. Procédé selon les revendications 9 et 10, **caractérisé en ce que** l'on détermine le ratio α entre les volumes occupés par les deux phases, à partir des vitesses réelle et débitante de la phase incluant le traceur.

12. Procédé selon la revendication 6, **caractérisé en ce que** l'on détermine le décalage temporel (τ) entre les signaux issus (22, 24) des deux détecteurs (25), pour obtenir une information représentative de la vitesse moyenne de transit des interfaces entre les deux phases.

**Claims**

1. Device (1) for determining the properties of a two-phase flow, comprising a first sensor (2) including an assembly formed of an electromagnetic radiation emitting member (3), and a member (4) receiving said radiation, placed opposite the emitting member (3) in order to pick up the radiation coming from the emitting member (3) and is transmitted through the flow (8), **characterised in that** it further comprises means for injecting a tracer into one of the phases of the flow and **in that** it comprises a second sensor (5), capable of detecting the presence of a tracer element present in one of the phases of the flow (8), the first sensor (2) having a low sensitivity to the tracer detected by the second sensor (5).

2. Device as claimed in claim 1, **characterised in that** the two sensors (2, 5) are placed in one and the same flow area.

3. Device as claimed in claim 1, **characterised in that** the second sensor includes an assembly formed of electromagnetic radiation emitting (6) and receiving (7) members.

4. Device as claimed in claim 1, **characterised in that** it comprises means (35) for deconvolving the signals (22, 24) coming from the two sensors (2, 5).

5. Device as claimed in claim 1, **characterised in that** the sensor emitting members (3, 6) are light-emitting diodes.

6. Method for determining the properties of a two-phase flow wherein the signal (22) coming from a first sensor (2) measuring the radiation transmitted through the flow (8) is analysed, **characterised in that**:

   ■ the signal (24) coming from a second sensor (5) sensitive to the presence of a tracer in one of the two phases of the flow (8) is analysed;
   ■ the two signals (22, 24) are deconvolved in order to obtain a processed signal (30) representing the evolution of the tracer inside the phase where this tracer is present.

7. Method as claimed in claim 6, **characterised in that** the tracer is introduced into one of the phases, in the form of a variation in concentration.

8. Method as claimed in claim 6, **characterised in that** the tracer is selected from the group that includes radioactive colourings, salts and components.

**9.** Method as claimed in claim 6, **characterised in that** the true velocity of the phase including the tracer is determined by measuring the dwell time of the tracer between a point situated flush with the second sensor (5), and a point situated flush with an additional tracer-sensitive sensor (40), and placed at a different location in the flow.

**10.** Method as claimed in claim 6, **characterised in that** the discharge velocity of the phase including the tracer is determined.

**11.** Method as claimed in claims 9 and 10, **characterised in that** the ratio α between the volumes occupied by the two phases is determined, starting with the true and discharge velocities of the phase including the tracer.

**12.** Method as claimed in claim 6, **characterised in that** the time shift (τ) between the signals (22, 24) coming from the two sensors (25) is determined, so as to obtain data representative of the average transit velocity of the interfaces between the two phases.

**Patentansprüche**

**1.** Vorrichtung (1) zur Bestimmung der Eigenschaften einer Zweiphasenströmung, einen ersten Detektor (2) umfassend, der eine Einheit enthält, die aus einer Strahlereinrichtung (3) für eine elektromagnetische Strahlung und einer Aufnehmereinrichtung (4) für die Strahlung gebildet ist, die gegenüber der Strahlereinrichtung (3) angeordnet ist, um die Strahlung einzufangen, die von der Strahlereinrichtung (3) abgegeben und durch die Strömung (8) hindurch übertragen wird, **dadurch gekennzeichnet, dass** sie darüber hinaus Einrichtungen zum Einspritzen eines Indikators in eine der Phasen der Strömung umfasst, und dass sie einen zweiten Detektor (5) umfasst, der in der Lage ist, das Vorhandensein eines in einer der Phasen der Strömung (8) vorhandenen Indikatorelements zu erfassen, wobei der erste Detektor (2) eine schwache Empfindlichkeit für den durch den zweiten Detektor (5) erfassten Indikator aufweist.

**2.** Vorrichtung nach Anspruch 1, **dadurch gekennzeichnet, dass** die beiden Detektoren (2, 5) in ein und derselben Strömungszone angeordnet sind.

**3.** Vorrichtung nach Anspruch 1, **dadurch gekennzeichnet, dass** der zweite Detektor eine Einheit enthält, die aus Strahlereinrichtungen (6) und Aufnehmereinrichtungen (7) für eine elektromagnetische Strahlung gebildet ist.

**4.** Vorrichtung nach Anspruch 1, **dadurch gekennzeichnet, dass** sie Einrichtungen (35) umfasst, um die Entfaltung von Signalen (22, 24) sicherzustellen, die von den beiden Detektoren (2, 5) abgegeben werden.

**5.** Vorrichtung nach Anspruch 1, **dadurch gekennzeichnet, dass** es sich bei den Strahlereinrichtungen (3, 6) der Detektoren um Leuchtdioden handelt.

**6.** Verfahren zur Bestimmung der Eigenschaften einer Zweiphasenströmung, bei dem das Signal (22) analysiert wird, das von einem ersten Detektor (2) abgegeben wird, der die durch die Strömung (8) hindurch übertragene Strahlung misst, **dadurch gekennzeichnet, dass**:

■ das Signal (24) analysiert wird, das vom zweiten Detektor (5) abgegeben wird, der empfindlich auf das Vorhandensein eines Indikators in einer der beiden Phasen der Strömung (8) anspricht;
■ die beiden Signale (22, 24) entfaltet werden, um ein verarbeitetes Signal (30) zu erhalten, das für den Ablauf des Indikators im Inneren der Phase repräsentativ ist, in der dieser Indikator vorhanden ist.

**7.** Verfahren nach Anspruch 6, **dadurch gekennzeichnet, dass** der Indikator in eine der Phasen in Form einer Konzentrationsveränderung eingeleitet wird.

**8.** Verfahren nach Anspruch 6, **dadurch gekennzeichnet, dass** der Indikator aus der Gruppe ausgewählt ist, die Farbstoffe, Salze und radioaktive Komponenten umfasst.

**9.** Verfahren nach Anspruch 6, **dadurch gekennzeichnet, dass** die Ist-Geschwindigkeit der den Indikator enthaltenden Phase bestimmt wird, indem die Verweildauer des Indikators zwischen einem Punkt, der sich senkrecht zum zweiten Detektor (5) befindet, und einem Punkt, der sich senkrecht zu einem komplementären Sensor (40) befindet, der empfindlich auf den Indikator anspricht und an einer bestimmten Stelle in der Strömung angeordnet ist, gemessen wird.

**10.** verfahren nach Anspruch 6, **dadurch gekennzeichnet, dass** die Durchflussgeschwindigkeit der den Indikator enthaltenden Phase bestimmt wird.

**11.** Verfahren nach den Ansprüchen 9 und 10, **dadurch gekennzeichnet, dass** das Verhältnis α zwischen den durch die beiden Phasen eingenommenen Volumina aus der Ist-Geschwindigkeit und der Durchflussgeschwindigkeit der den Indikator enthaltenden Phase bestimmt wird.

**12.** Verfahren nach Anspruch 6, **dadurch gekennzeichnet, dass** der zeitliche Versatz (τ) zwischen den von den beiden Detektoren (25) abgegebenen Signalen (22, 24) bestimmt wird, um eine Information zu erhalten, die für die mittlere Transitgeschwindigkeit der Grenzflächen zwischen den beiden Phasen repräsentativ ist.

**Fig. 1**

**Fig. 2**

Fig. 3

Fig. 4

Fig. 5

Fig. 6

Fig. 7